# FASCICULE DE BREVET EUROPEEN

(11) **EP 3 437 999 B1**
(45) Date de publication et mention de la délivrance du brevet: **09.10.2019**
(21) Numéro de dépôt: 18178162.6
(22) Date de dépôt: 18.06.2018
(51) Int. Cl.: B64D 27/26, B64C 3/32, B64D 27/18

(54) **STRUCTURE PRIMAIRE ALLEGEE POUR MAT D'ACCROCHAGE DE MOTEUR D'AERONEF**
LEICHTE PRIMÄRSTRUKTUR FÜR AUFHÄNGEMAST EINES TRIEBWERKS EINES LUFTFAHRZEUGS
LIGHT PRIMARY STRUCTURE FOR AIRCRAFT ENGINE MOUNTING STRUT

(30) Priorité: 02.08.2017 FR 1757443
(43) Date de publication de la demande: 06.02.2019
(73) Titulaire: Airbus (S.A.S.), 31700 Blagnac (FR)
(72) Inventeur: JULE, Pascal, 31170 TOURNEFEUILLE (FR)
(74) Mandataire: Sarraméa, Claude

(56) Documents cités:
- EP-A1- 2 426 051
- FR-A1- 2 956 706
- US-A1- 2017 106 990

## Description

### DOMAINE TECHNIQUE

La présente invention se rapporte au domaine des ensembles pour aéronef comprenant un mât d'accrochage de moteur d'aéronef, un élément de voilure, ainsi que des moyens d'accrochage de la structure primaire du mât sur l'élément de voilure.

Elle s'applique préférentiellement aux avions commerciaux.

### ETAT DE LA TECHNIQUE ANTERIEURE

Sur les aéronefs existants, les moteurs tels que les turboréacteurs à double flux et à double corps sont habituellement accrochés en dessous de la voilure par des dispositifs d'accrochage complexes, également appelés « EMS » (de l'anglais « Engine Mounting Structure »), ou encore mât d'accrochage. De tels mâts d'accrochage sont par exemple connus du document FR 3 014 840.

Les mâts d'accrochage habituellement employés présentent une structure primaire, également dénommée structure rigide. Cette structure primaire présente généralement au moins une partie en forme générale de caisson, c'est-à-dire qu'elle est constituée par l'assemblage de longerons inférieur et supérieur raccordés entre eux par une pluralité de nervures transversales de rigidification, situées à l'intérieur du caisson. Les longerons sont agencés en faces inférieure et supérieure, tandis que des panneaux latéraux ferment le caisson en faces latérales. Des cornières peuvent assurer la liaison mécanique entre ces éléments constitutifs du caisson, dont la section transversale adopte une forme générale de quadrilatère, habituellement carrée ou rectangulaire.

De façon connue, la structure primaire d'un mât d'accrochage est conçue pour permettre la transmission à la voilure des efforts statiques et dynamiques engendrés par les moteurs, tels que le poids, la poussée, ou encore les différents efforts dynamiques.

Pour ce faire, des moyens d'accrochage sont agencés entre l'élément de voilure et la structure primaire du mât. Il s'agit de plusieurs attaches de voilure, situées en partie arrière de la structure primaire. Dans certaines réalisations, cette structure primaire est complétée par une sous-structure arrière fixée derrière le caisson. Dans ce cas de figure, l'extrémité avant de la sous-structure arrière est fixée par boulons à l'extrémité arrière du caisson, et cette extrémité avant se trouve logée entre des portions de raccordement prévues à l'arrière des deux panneaux latéraux du caisson. Chaque portion de raccordement prend la forme d'une oreille pourvue d'un orifice de liaison logeant un axe de liaison d'une attache avant latérale de voilure.

Pour satisfaire les exigences de sécurité, dites « Fail Safe », il apparait nécessaire de prévoir pour chaque oreille un chemin d'efforts secondaire, capable d'assurer la reprise d'efforts pendant une durée déterminée suite à une défaillance survenant sur l'une de ces oreilles de panneau latéral du caisson. Cette redondance est généralement assurée en intégrant sur le mât une oreille de secours, qui est plaquée contre l'oreille principale et fixée à son panneau latéral associé par des boulons. Ainsi, l'axe de liaison de l'attache avant latérale de voilure traverse les deux oreilles, de sorte qu'en cas de défaillance de l'oreille principale, l'oreille de secours assure une continuité de la transmission d'efforts vers l'élément de voilure de l'aéronef.

Si cette solution s'avère satisfaisante d'un point de vue structurel et sécuritaire, elle présente cependant une masse globale importante, pénalisée notamment par la présence des oreilles de secours et des leurs moyens de fixation sur les panneaux latéraux du caisson. Il subsiste par conséquent un besoin d'optimisation de la conception de la structure primaire du mât, afin d'en réduire sa masse globale.

Le document EP 2 426 051 A1 décrit également un mât d'accrochage de moteur d'aéronef selon l'art antérieur.

### EXPOSE DE L'INVENTION

Pour répondre à ce besoin, l'invention a tout d'abord pour objet un mât d'accrochage de moteur d'aéronef comprenant une structure primaire comportant un caisson ainsi qu'une sous-structure arrière fixée sur ledit caisson, ledit caisson comprenant deux panneaux latéraux opposés, chacun équipé à son extrémité arrière d'une première portion de raccordement traversée par un premier orifice de liaison destiné à recevoir un axe de liaison d'une attache avant latérale de voilure.

Selon l'invention, la sous-structure arrière est réalisée d'une seule pièce comprenant une extrémité arrière correspondant à l'extrémité arrière de la structure primaire , la sous-structure arrière comprenant deux flancs latéraux opposés respectivement fixés sur les deux panneaux latéraux du caisson à l'aide d'éléments de fixation, chaque flanc latéral présentant une seconde portion de raccordement traversée par un second orifice de liaison aligné avec ledit premier orifice de liaison, et également destiné à recevoir l'axe de liaison de l'attache avant latérale de voilure.

L'invention est par conséquent astucieuse en ce qu'elle met à profit la sous-structure arrière pour assurer la redondance des premières portions de raccordement prévues sur les panneaux latéraux du caisson. Les oreilles de secours employées dans l'art antérieur ne sont donc plus nécessaires, ni leurs moyens de fixation.

Il en découle avantageusement un gain en masse pour la structure primaire du mât d'accrochage, gain qui peut par exemple atteindre 200 kg par mât.

L'invention prévoit par ailleurs préférentiellement au moins l'une des caractéristiques optionnelles suivantes, prises isolément ou en combinaison.

Ladite seconde portion de raccordement est agencée adjacente à une ouverture pratiquée à travers la sous-structure arrière, pour la réalisation d'opérations de maintenance.

Ladite ouverture est pratiquée en partie dans le flanc latéral, et en partie dans un flanc supérieur ou inférieur de la sous-structure arrière, flanc à partir duquel ladite seconde portion de raccordement se projette vers l'extérieur.

Chacune des première et seconde portions de raccordement prend la forme d'une oreille.

Ladite sous-structure arrière présente une forme qui se rétrécit en allant vers l'arrière, et présente préférentiellement une forme générale conique ou pyramidale.

Ladite sous-structure arrière est réalisée en matériau composite.

Ladite sous-structure arrière comprend une extrémité avant de fixation solidarisée à l'aide desdits éléments de fixation aux deux panneaux latéraux du caisson, ainsi qu'à un longeron supérieur et à un longeron inférieur de ce même caisson.

L'un des longerons supérieur et inférieur du caisson comporte une extension arrière de longeron recouvrant une partie de la sous-structure arrière, et solidarisée à celle-ci par des éléments de fixation.

Les éléments de fixation sont préférentiellement des boulons, ou des éléments similaires.

Le mât comporte un élément de renfort rapporté entre les deux flancs latéraux de la sous-structure arrière.

L'extrémité arrière de la sous-structure définit deux orifices de liaison arrière alignés et destinés à recevoir ledit axe de liaison de l'attache arrière de voilure.

L'invention a également pour objet un ensemble pour aéronef comprenant :
- un mât d'accrochage de moteur tel que décrit ci-dessus ;
- un élément de voilure ; et
- des moyens d'accrochage de la structure primaire du mât sur l'élément de voilure de l'aéronef.

Lesdits moyens d'accrochage sont de préférence constitués :
- d'une attache avant centrale de voilure ;
- de deux attaches avant latérales de voilure ;
- d'une attache arrière de voilure comprenant un axe de liaison traversant au moins un orifice de liaison arrière de l'extrémité arrière de la sous-structure arrière, ou d'une attache boulonnée comprenant des boulons traversant un flanc supérieur de la sous-structure.

En fonction de la nature de la troisième attache, le système de reprise d'efforts est de nature isostatique ou hyperstatique.

Enfin, l'invention a pour objet un aéronef comprenant au moins un tel ensemble.

D'autres avantages et caractéristiques de l'invention apparaîtront dans la description détaillée non limitative ci-dessous.

### BREVE DESCRIPTION DES DESSINS

Cette description sera faite au regard des dessins annexés parmi lesquels ;
- la figure 1 représente une vue de côté d'un aéronef selon l'invention ;
- la figure 2 est une vue schématique en coupe longitudinale d'un ensemble pour aéronef selon l'invention ;
- la figure 2a est une vue en coupe prise le long de la ligne IIa-IIa de la figure 2 ;
- la figure 3 représente une vue en perspective d'une partie de la structure primaire du mât d'accrochage montré sur les figures 2 et 2a ;
- la figure 4 est une vue en perspective de la sous-structure arrière de la structure primaire montrée sur la figure précédente ;
- les figures 5 et 6 sont des vues en coupes transversales de la structure primaire du mât d'accrochage, prise respectivement selon les plans P1 et P2 de la figure 3 ;
- la figure 7 est une vue en perspective similaire à celle de la figure 3, montrant schématiquement la reprise des efforts assurée par les attaches de voilure ; et
- la figure 8 est une vue similaire à celle de la figure 7, selon une alternative de réalisation.

### EXPOSE DETAILLE DE MODES DE REALISATION PREFERES

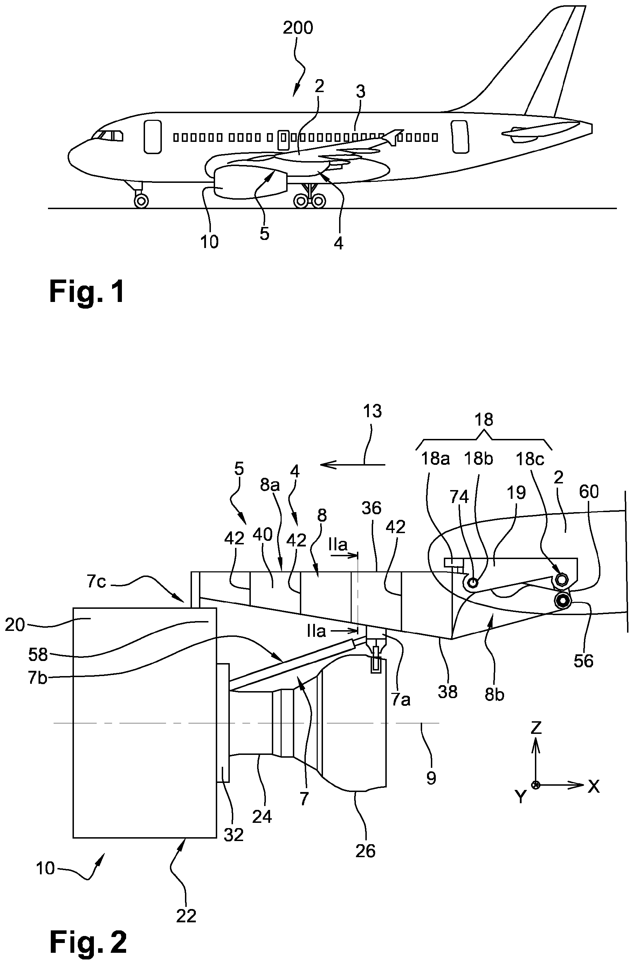

En référence à la figure 1, il est représenté un aéronef 200 comprenant un fuselage 3 sur lequel deux ailes 2 sont fixées (une seule visible sur la figure 1). Ces ailes 2 font partie intégrante de plusieurs ensembles 5 spécifiques à l'invention, qui seront détaillés ci-après. Chaque ensemble 5 comprend globalement un élément de voilure, ici une aile 2 ou un tronçon d'aile 2, un mât d'accrochage de moteur 4, ainsi que des moyens d'accrochage du mât sur l'aile. L'ensemble 5 est prévu pour porter un moteur 10, de préférence à double flux et à double corps tel qu'un turboréacteur.

De façon classique, le moteur 10 est suspendu sous l'aile 2. Néanmoins, l'invention couvre d'autres solutions dans lesquelles le moteur est situé au-dessus de l'aile, ou encore porté par un autre élément de voilure comme un empennage vertical ou horizontal, ou une dérive.

Dans toute la description qui va suivre, par convention, la direction X correspond à la direction longitudinale du mât 4 qui est également assimilable à la direction longitudinale du turboréacteur 10 et à celle de l'ensemble 5, cette direction X étant parallèle à un axe longitudinal 9 de ce turboréacteur 10. D'autre part, la direction Y correspond à la direction orientée transversalement par rapport au mât 4 et également assimilable à la direction transversale du turboréacteur et à celle de l'ensemble 5, et la direction Z correspond à la direction verticale ou de la hauteur, ces trois directions X, Y et Z étant orthogonales entre elles.

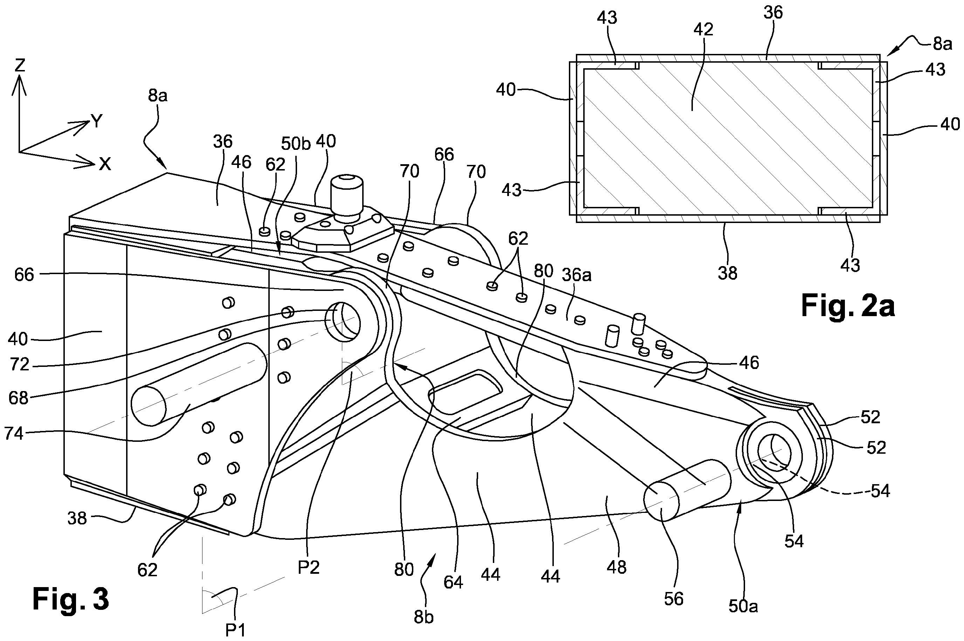

D'autre part, les termes « avant » et « arrière » sont à considérer par rapport à une direction d'avancement de l'aéronef rencontrée suite à la poussée exercée par les turboréacteurs 10, cette direction étant représentée schématiquement par la flèche 13 sur la figure 2. En référence à cette figure, le turboréacteur 10 comporte une enveloppe externe structurale formée par différents carters. Il s'agit, de l'avant vers l'arrière, d'un carter de soufflante 20, d'un carter intermédiaire 22, d'un carter central 24 et d'un carter d'éjection de gaz 26. Le carter intermédiaire 22 comprend une virole extérieure 28 qui se situe dans le prolongement arrière du carter de soufflante, avec sensiblement le même diamètre. Cette virole 28 porte intérieurement des bras radiaux structuraux (non représentés, également dits OGV structuraux) qui sont raccordés, à leur extrémité interne, à un moyeu 32 du carter intermédiaire 22.

Sur la figure 2, seule la structure primaire 8 du mât a été représentée, mais pas les structures secondaires destinées à être rapportées sur cette structure primaire 8. Les structures secondaires sont conventionnelles et ne seront pas détaillées ci-après. Elles assurent la ségrégation et le maintien des systèmes tout en supportant des éléments de carénage aérodynamique.

La structure primaire 8 est spécifique à la présente invention et elle sera détaillée ci-après. Elle comprend une partie 8a en forme de caisson, constituant la plus grande partie de la structure primaire. Celle-ci est complétée par une sous-structure arrière 8b présentant une forme qui se rétrécit en allant vers l'arrière. A cet égard, il est noté que la sous-structure arrière 8b présente de préférence une forme générale conique ou de pyramide.

Le caisson 8a, qui s'étend donc de l'extrémité avant de la structure primaire jusqu'à l'extrémité avant de la sous-structure arrière 8b, est formée par des longerons supérieur 36 et inférieur 38, et deux panneaux latéraux opposés 40 (un seul visible sur la figure 2). Ces éléments de caisson sont raccordés entre eux par l'intermédiaire de nervures intérieures transversales de rigidification 42, qui sont habituellement orientées selon des plans parallèles YZ. Ces nervures sont réparties dans le caisson, le long de la direction X. En référence à la figure 2a, il est noté que des cornières 43 peuvent également être agencées entre les éléments 36, 38, 40, de façon à permettre leur fixation les uns aux autres. Alternativement, il est également possible de prévoir une conception plus « intégrée » du caisson, dans laquelle une même pièce peut former tout ou partie de plusieurs de ces éléments 36, 38, 40.

Le moteur 10 est accroché sous l'aile au caisson 8a par des moyens d'accrochage 7 préférentiellement constitués d'une attache moteur avant 7c, d'une attache moteur arrière 7a et d'un dispositif de reprise des efforts de poussée formé par deux bielles latérales 7b de reprise des efforts de poussée. L'attache moteur arrière 7a relie le carter d'éjection 26 au longeron inférieur 38 du caisson. L'attache moteur avant 7c relie l'extrémité avant du caisson au carter de soufflante 20, ou au carter intermédiaire 22 situé dans son prolongement arrière. Dans cette dernière solution, l'attache moteur avant 7c est raccordée plus préférentiellement à la virole extérieure 28 de ce carter intermédiaire 22. De préférence, les moyens d'accrochage 7 forment un système isostatique de reprise d'efforts.

En outre, la structure primaire 8 est raccordée à l'aile 2 par des moyens d'accrochage 18, réalisés ici par une attache avant centrale de voilure 18a, deux attaches avant latérales de voilure 18b (une seule visible sur la figure 2), et une attache arrière de voilure 18c. Ces attaches de voilure, qui seront détaillées ultérieurement, sont logées en tout ou partie dans l'aile, et coopèrent avec une ou plusieurs ferrures 19 solidaires d'un caisson d'aile.

Ces attaches de voilure 18a, 18b, 18c sont situées côté arrière de la structure primaire 8, essentiellement au niveau de la sous-structure arrière 8b. Cette dernière est spécifique à l'invention, et elle va à présent être décrite en référence conjointement aux figures 2 à 6.

La sous-structure arrière 8b est réalisée d'une seule pièce, en matériau composite, de préférence à matrice organique. Par exemple, il peut s'agir d'un matériau composite du type comprenant des fibres de verre et/ou de carbone et une matrice thermodurcissable ou thermoplastique. Cette sous-structure 8b, de forme générale conique ou pyramidale, présente deux flancs latéraux opposés 44, un flanc supérieur 46 et un flanc inférieur 48. La sous-structure 8b constitue la partie arrière de la structure primaire, et de ce fait, son extrémité arrière 50a correspond à l'extrémité arrière de cette structure primaire du mât.

Au niveau de son extrémité arrière 50a, la sous-structure 8b présente deux portions de raccordement 52 superposées selon la direction Y, chacune traversée par un orifice de liaison arrière 54. Les deux orifices 54, alignés selon la direction Y, reçoivent un axe de liaison 56 appartenant à l'attache arrière de voilure 18c. Comme cela est schématisé sur la figure 2, l'axe de liaison arrière 56 coopère avec une ou plusieurs manilles 60 de l'attache 18c, ces manilles étant également articulées sur la ferrure 19 logée dans l'aile 2.

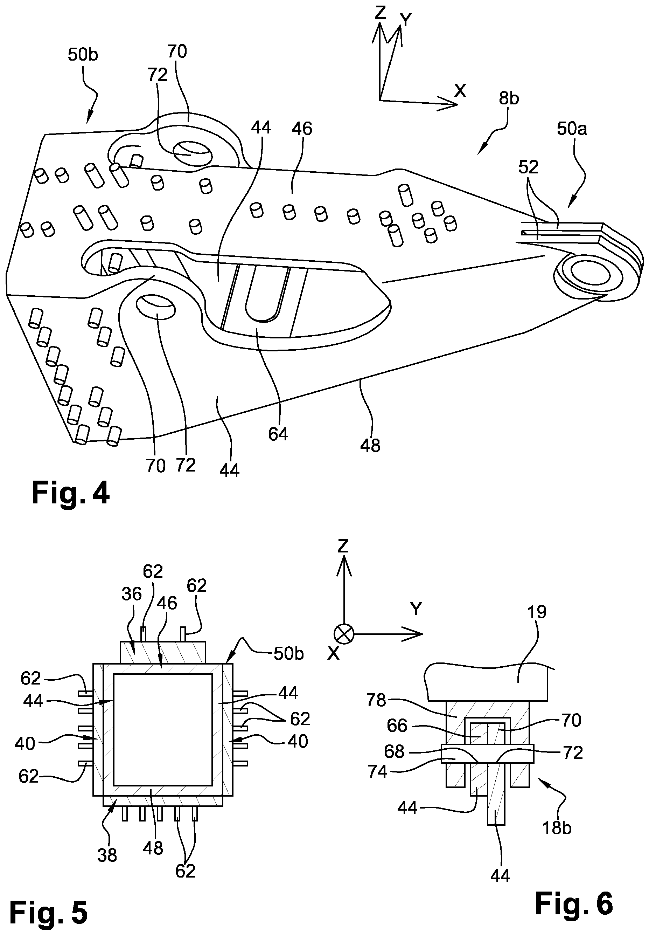

L'extrémité avant 50b de la sous-structure 8b constitue une portion de fixation sur le caisson 8a, et se trouve insérée entre les deux panneaux latéraux 40 qui s'étendent vers l'arrière au-delà de la partie caisson. En section transversale telle que représentée sur la figure 5, cette extrémité avant de fixation 50b de la sous-structure 8b prend une forme de quadrilatère, de préférence un rectangle ou un carré. Comme cela est notamment schématisé sur la figure 5, les éléments de fixation 62 sont employés pour raccorder deux à deux les éléments constitutifs de l'extrémité avant 50b de la sous-structure 8b, et l'extrémité arrière du caisson. Ces éléments sont des boulons 62 ou des éléments similaires. Plus précisément, des boulons 62 traversent et raccordent une partie arrière de chaque panneau latéral 40 avec l'un des flancs latéraux 44 de la sous-structure 8b. D'autres boulons 62 traversent et raccordent le flanc supérieur 46 et le longeron supérieur 36, tandis qu'encore d'autres boulons 62 traversent le flanc inférieur 48 et le longeron inférieur 38. A cet égard, il est également noté que le longeron supérieur 36 du caisson 8a peut comporter une extension arrière 36a recouvrant et plaquée contre le flanc supérieur 46 de la sous-structure 8b. Ici encore, des boulons 62 servent à la fixation de l'extension 36a, qui s'étend jusque dans une zone proche des portions de raccordement 52.

Cette solidarisation de l'extension arrière 36a du longeron supérieur 36 sur le flanc supérieur 46 renforce la tenue mécanique de la sous-structure 8b, dont les deux flancs latéraux 44 peuvent être reliés par un élément de renfort 64. Ce dernier, de préférence réalisé en matériau métallique et agencé entre les flancs supérieur 46 et inférieur 48, participe également au renforcement de la tenue mécanique de la sous-structure 8b.

A l'arrière de la portion de chaque panneau latéral de caisson 40, ce dernier présente une première portion de raccordement 66 en forme d'oreille traversée par un premier orifice de liaison 68 orienté selon la direction Y. En outre, à proximité de l'extrémité avant 50b, chaque flanc latéral 44 comporte une seconde portion de raccordement 70 également en forme d'oreille, et traversée par un second orifice de liaison 72 aligné avec le premier orifice 68. Ces deux portions 66, 70 sont plaquées l'une contre l'autre selon la direction Y, et leurs orifices respectifs 68, 72 sont traversés par un même axe de liaison 74 de l'attache avant latérale de voilure 18b associée. Comme cela est montré sur la figure 6, cet axe de liaison 74 traverse également une chape 78 solidaire de la ferrure 19 logée dans l'aile, afin de former cette attache 18b.

Dans ce mode de réalisation préféré, il est prévu les deux oreilles 66, 70 raccordées entre elles par les boulons 62 situés plus vers l'avant, et servant à fixer le longeron latéral 40 et flanc latéral 44. Cela permet d'aboutir à un assemblage du type à simple cisaillement, mais d'autres solutions sont possibles, sans sortir du cadre de l'invention. En particulier, un assemblage du type à double cisaillement est envisageable, en remplaçant par exemple chaque seconde portion de raccordement 70 par une chape dans laquelle serait logée la première portion de raccordement 66.

Afin de garantir l'accessibilité des opérateurs à l'intérieur de la structure primaire, il est prévu des ouvertures 80 à travers la sous-structure arrière 8b. Chaque ouverture 80 permet par exemple le passage d'un bras d'un opérateur, pour réaliser des opérations de maintenance depuis l'intérieur de la sous-structure 8b. Il s'agit de préférence de deux ouvertures 80, chacune adjacente à l'une des secondes portions de raccordement 70. Plus précisément, chaque ouverture 80 s'étend à partir de la portion 70 d'une part vers l'arrière à travers le flanc latéral associé 44, et d'autre part dans la direction Y à travers le flanc supérieur 46. Entre les deux ouvertures 80, la partie subsistante de ce flanc supérieur 46 est celle qui reçoit l'extension arrière 36a du longeron supérieur de caisson.

Les ouvertures 80 facilitent également l'accessibilité aux orifices de liaison 68, 72 pour le montage des axes de liaison 74, cette facilité étant renforcée par le fait que chaque seconde portion de raccordement 70 se projette vers l'extérieur et vers le haut à partir du flanc supérieur 46 de la sous-structure 8b.

Grâce à cet agencement, chaque attache avant latéral de voilure 18b présente la redondance requise au niveau des oreilles 60, 70. Ainsi, en cas de défaillance survenant sur l'une d'elles, l'autre reste capable de reprendre les efforts provenant du caisson et de les transmettre vers l'aile 2. La conception proposée présente par conséquent un caractère « Fail Safe », obtenu de façon astucieuse à l'aide de la sous-structure arrière 8b.

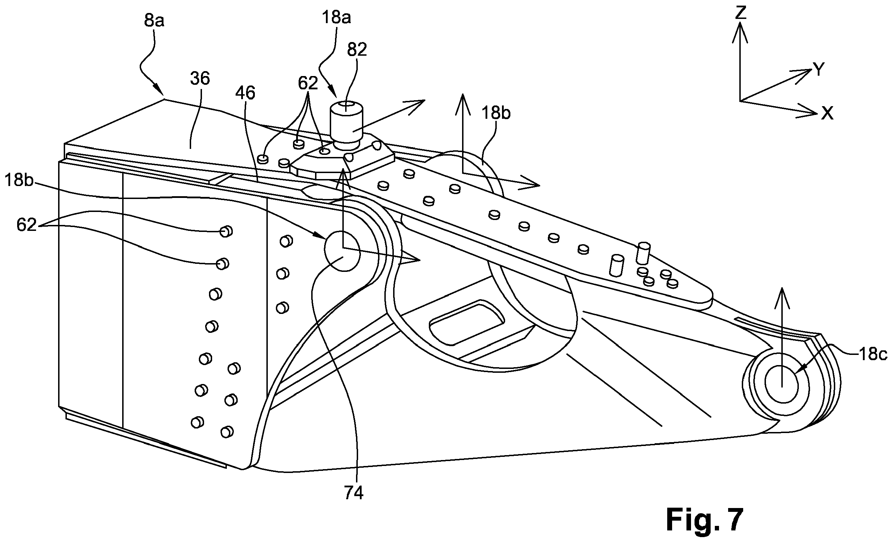

La figure 7 schématise la reprise des efforts par chacune des quatre attaches de voilure, qui forment ensemble un système isostatique de reprise d'efforts.

L'attache avant centrale de voilure 18a prend la forme d'un pion de cisaillement 82 orienté selon la direction Z, et assure uniquement la reprise des efforts selon la direction Y. Le pion 82 est solidaire d'une ferrure qui est fixée par les boulons 62 au niveau d'une zone de superposition entre le flanc supérieur 46 et le longeron supérieur de caisson 36. Légèrement vers l'arrière, se trouvent les deux attaches avant latérales de voilure 18b, qui reprennent chacune des efforts selon la direction X et selon la direction Z. Enfin, l'attache arrière de voilure 18c reprend uniquement les efforts s'exerçant selon la direction Z.

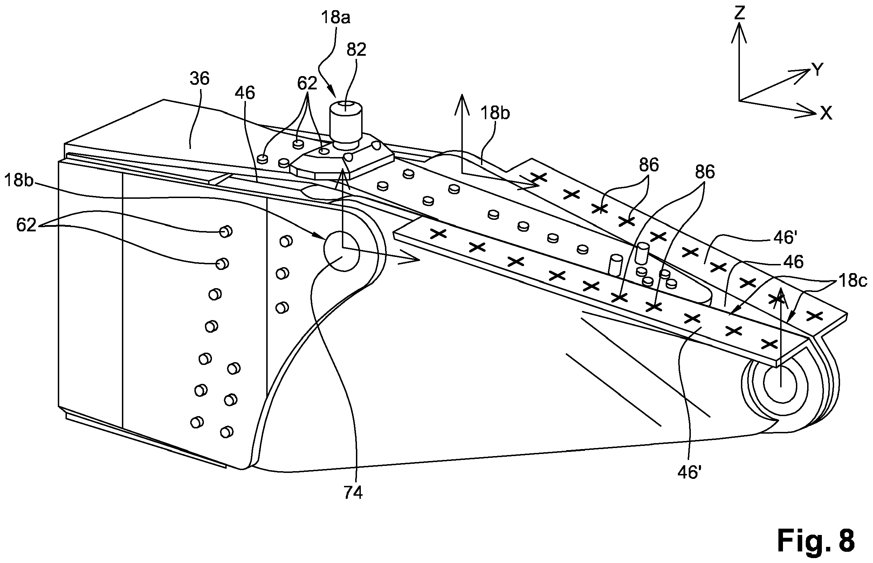

La figure 8 représente une alternative de réalisation, dans laquelle l'attache arrière de voilure est remplacée par une attache boulonnée 18c', rendant le système de reprise hyperstatique. Cette attache boulonnée 18c' comporte ainsi des boulons 86 traversant l'élément de voilure (non visible sur la figure 8) ainsi que la sous-structure arrière 8b. De préférence, les boulons 86 traversent le flanc supérieur 46 de la sous-structure arrière, et plus précisément deux rebords supérieurs 46' des flancs latéraux 44 qui participent donc à la définition de ce flanc supérieur. Pour ce faire, les rebords supérieurs 46' sont de préférence repliés à 90° par rapport à leurs flancs latéraux respectifs 44.

Les boulons 86 sont répartis selon la direction X sur une grande partie de la sous-structure arrière 8b, voire sur la totalité de celle-ci. Enfin, il est noté que dans cette alternative de réalisation, les ouvertures 80 peuvent être supprimées afin de renforcer la tenue mécanique de la sous-structure arrière 8b.

Bien entendu, diverses modifications peuvent être apportées par l'homme du métier à l'invention qui vient d'être décrite, uniquement à titre d'exemples non limitatifs.

## Revendications

1. Mât d'accrochage (4) de moteur (10) d'aéronef comprenant une structure primaire (8) comportant un caisson (8a) ainsi qu'une sous-structure arrière (8a) fixée sur ledit caisson, ledit caisson comprenant deux panneaux latéraux opposés (40), chacun équipé à son extrémité arrière d'une première portion de raccordement (66) traversée par un premier orifice de liaison (68) destiné à recevoir un axe de liaison (74) d'une attache avant latérale de voilure (18b),
**caractérisé en ce que** la sous-structure arrière (8b) est réalisée d'une seule pièce comprenant une extrémité arrière (50a) correspondant à l'extrémité arrière de la structure primaire (8), la sous-structure arrière comprenant deux flancs latéraux opposés (44) respectivement fixés sur les deux panneaux latéraux (40) du caisson à l'aide d'éléments de fixation (62), chaque flanc latéral présentant une seconde portion de raccordement (70) traversée par un second orifice de liaison (72) aligné avec ledit premier orifice de liaison (68), et également destiné à recevoir l'axe de liaison (74) de l'attache avant latérale de voilure (18b).

2. Mât d'accrochage selon la revendication 1, **caractérisé en ce que** ladite seconde portion de raccordement (70) est agencée adjacente à une ouverture (80) pratiquée à travers la sous-structure arrière (8b), pour la réalisation d'opérations de maintenance.

3. Mât d'accrochage selon la revendication 2, **caractérisé en ce que** ladite ouverture (80) est pratiquée en partie dans le flanc latéral (44), et en partie dans un flanc supérieur ou inférieur (46) de la sous-structure arrière (8b), flanc à partir duquel ladite seconde portion de raccordement (70) se projette vers l'extérieur.

4. Mât d'accrochage selon l'une quelconque des revendications précédentes, **caractérisé en ce que** chacune des première et seconde portions de raccordement (66, 70) prend la forme d'une oreille.

5. Mât d'accrochage selon l'une quelconque des revendications précédentes, **caractérisé en ce que** ladite sous-structure arrière (8b) présente une forme qui se rétrécit en allant vers l'arrière, et présente préférentiellement une forme générale conique ou pyramidale.

6. Mât d'accrochage selon l'une quelconque des revendications précédentes, **caractérisé en ce que** ladite sous-structure arrière (8b) est réalisée en matériau composite.

7. Mât d'accrochage selon l'une quelconque des revendications précédentes, **caractérisé en ce que** ladite sous-structure arrière (8b) comprend une extrémité avant de fixation (50b) solidarisée à l'aide desdits éléments de fixation (62) aux deux panneaux latéraux du caisson (40), ainsi qu'à un longeron supérieur (36) et à un longeron inférieur (38) de ce même caisson.

8. Mât d'accrochage selon la revendication précédente, **caractérisé en ce que** l'un des longerons supérieur et inférieur du caisson (36) comporte une extension arrière de longeron (36a) recouvrant une partie de la sous-structure arrière (8b), et solidarisée à celle-ci par des éléments de fixation (62).

9. Mât d'accrochage selon l'une quelconque des revendications précédentes, **caractérisé en ce que** les éléments de fixation (62) sont des boulons.

10. Mât d'accrochage selon l'une quelconque des revendications précédentes, **caractérisé en ce qu'**il comporte un élément de renfort (64) rapporté entre les deux flancs latéraux (44) de la sous-structure arrière (8b).

11. Mât d'accrochage selon l'une quelconque des revendications précédentes, **caractérisé en ce que** l'extrémité arrière (50b) de la sous-structure arrière (8b) définit deux orifices de liaison arrière (52) alignés et destinés à recevoir ledit axe de liaison (54) de l'attache arrière de voilure (18c).

12. Ensemble (5) pour aéronef comprenant :
- un mât d'accrochage de moteur (4) selon l'une quelconque des revendications précédentes ;
- un élément de voilure (2) ; et
- des moyens d'accrochage (18) de la structure primaire (8) du mât sur l'élément de voilure (2) de l'aéronef.

13. Ensemble selon la revendication 12, **caractérisé en ce que** lesdits moyens d'accrochage (18) sont constitués :
- d'une attache avant centrale de voilure (18a) ;
- de deux attaches avant latérales de voilure (18b) ;
- d'une attache arrière de voilure (18c) comprenant un axe de liaison (56) traversant au moins un orifice de liaison arrière (54) de l'extrémité arrière (50a) de la sous-structure arrière (8b), ou d'une attache boulonnée (18c') comprenant des boulons traversant un flanc supérieur (46) de la sous-structure (8b).

14. Ensemble selon la revendication 12 ou la revendication 13, **caractérisé en ce que** lesdits moyens d'accrochage (18) forment un système isostatique ou hyperstatique de reprise d'efforts.

15. Aéronef (200) comprenant au moins un ensemble (5) selon la revendication précédente.

## Patentansprüche

1. Aufhängemast (4) eines Triebwerks (10) eines Luftfahrzeugs, umfassend eine Primärstruktur (8), umfassend ein Gehäuse (8a) sowie eine hintere Substruktur (8b), die an dem Gehäuse befestigt ist, wobei das Gehäuse zwei gegenüberliegende laterale Platten (40) umfasst, wobei jede an ihrem hinteren Ende mit einem ersten Anschlussabschnitt (66) ausgestattet ist, der von einem ersten Verbindungsloch (68) durchquert wird, das dazu bestimmt ist, eine Verbindungsachse (74) einer lateralen vorderen Halterung einer Tragfläche (18b) aufzunehmen,
**dadurch gekennzeichnet, dass** die hintere Substruktur (8b) aus einem einzigen Stück hergestellt ist, umfassend ein hinteres Ende (50a), das dem hinteren Ende der Primärstruktur (8) entspricht, wobei die hintere Substruktur zwei gegenüberliegende laterale Flanken (44) umfasst, die jeweils an den beiden lateralen Platten (40) des Gehäuses mit Hilfe von Befestigungselementen (62) befestigt sind, wobei jede laterale Flanke einen zweiten Anschlussabschnitt (70) aufweist, der von einem zweiten Verbindungsloch (72) durchquert wird, das mit dem ersten Verbindungsloch (68) ausgerichtet ist, und auch dazu bestimmt ist, die Verbindungsachse (74) der lateralen vorderen Halterung einer Tragfläche (18b) aufzunehmen.

2. Aufhängemast nach Anspruch 1, **dadurch gekennzeichnet, dass** der zweite Anschlussabschnitt (70) benachbart einer Öffnung (80) angeordnet ist, die quer durch die hintere Substruktur (8b) ausgeführt ist, zur Durchführung von Wartungsvorgängen.

3. Aufhängemast nach Anspruch 2, **dadurch gekennzeichnet, dass** die Öffnung (80) teilweise in der lateralen Flanke (44) und teilweise in einer oberen oder unteren Flanke (46) der hinteren Substruktur (8b) ausgeführt ist, wobei von der Flanke der zweite Anschlussabschnitt (70) nach außen vorsteht.

4. Aufhängemast nach einem der vorhergehenden Ansprüche, **dadurch gekennzeichnet, dass** jeder von dem ersten und zweiten Anschlussabschnitt (66, 70) die Form eines Ohrs aufweist.

5. Aufhängemast nach einem der vorhergehenden Ansprüche, **dadurch gekennzeichnet, dass** die hintere Substruktur (8b) eine Form aufweist, die nach hinten kleiner wird, und vorzugsweise eine allgemeine Kegel- oder Pyramidenform aufweist.

6. Aufhängemast nach einem der vorhergehenden Ansprüche, **dadurch gekennzeichnet, dass** die hintere Substruktur (8b) aus einem Verbundmaterial hergestellt ist.

7. Aufhängemast nach einem der vorhergehenden Ansprüche, **dadurch gekennzeichnet, dass** die hintere Substruktur (8b) ein Ende vor der Befestigung (50b) aufweist, das mit Hilfe der Befestigungselemente (62) mit zwei lateralen Platten des Gehäuses (40) fest verbunden ist, sowie mit einem oberen Längsträger (36) und mit einem unteren Längsträger (38) desselben Gehäuses.

8. Aufhängemast nach einem der vorhergehenden Ansprüche, **dadurch gekennzeichnet, dass** einer von dem oberen und unteren Längsträger des Gehäuses (36) eine hintere Längsträgerverlängerung (36a) umfasst, die einen Teil der hinteren Substruktur (8b) bedeckt, und mit dieser durch Befestigungselemente (62) fest verbunden ist.

9. Aufhängemast nach einem der vorhergehenden Ansprüche, **dadurch gekennzeichnet, dass** die Befestigungselemente (62) Schrauben sind.

10. Aufhängemast nach einem der vorhergehenden Ansprüche, **dadurch gekennzeichnet, dass** dieser ein Verstärkungselement (64) umfasst, das zwischen den beiden lateralen Flanken (44) der hinteren Substruktur (8b) angebracht ist.

11. Aufhängemast nach einem der vorhergehenden Ansprüche, **dadurch gekennzeichnet, dass** das hintere Ende (50b) der hinteren Substruktur (8b) zwei hintere Verbindungslöcher (52) definiert, die ausgerichtet sind und dazu bestimmt sind, die Verbindungsachse (54) der hinteren Halterung einer Tragfläche (18c) aufzunehmen.

12. Einheit (5) für ein Luftfahrzeug, umfassend:
- einen Aufhängemast eines Triebwerks (4) nach einem der vorhergehenden Ansprüche;
- ein Tragflächenelement (2); und
- Aufhängemittel (18) der Primärstruktur (8) des Masts an dem Tragflächenelement (2) des Luftfahrzeugs.

13. Einheit nach Anspruch 12, **dadurch gekennzeichnet, dass** die Aufhängemittel (18) bestehen aus:
- einer zentralen vorderen Halterung einer Tragfläche (18a);
- zwei lateralen vorderen Halterungen einer Tragfläche (18b);
- einer hinteren Halterung einer Tragfläche (18c), umfassend eine Verbindungsachse (56), die mindestens ein hinteres Verbindungsloch (54) des hinteren Endes (50a) der hinteren Substruktur (8b) durchquert, oder einer verschraubten Halterung (18c'), umfassend Schrauben, die eine obere Flanke (46) der Substruktur (8b) durchqueren.

14. Einheit nach Anspruch 12 oder Anspruch 13, **dadurch gekennzeichnet, dass** die Aufhängemittel (18) ein isostatisches oder hyperstatisches Schubsystem bilden.

15. Luftfahrzeug (200), umfassend mindestens eine Einheit (5) nach dem vorhergehenden Anspruch.

## Claims

1. Mounting pylon (4) for an engine (10) of an aircraft, including a primary structure (8) comprising a box (8a) and a rear sub-structure (8b) fastened to said box, said box including two opposite lateral panels (40), each equipped at its rear end with a first linking portion (66) through which passes a first connection orifice (68) that is designed to receive a connection pin (74) of a lateral front wing attachment (18b),
**characterized in that** the rear sub-structure (8b) is made in one piece including a rear end (50a) corresponding to the rear end of the primary structure (8), the rear sub-structure including two opposite lateral flanks (44) that are respectively fastened to the two lateral panels (40) of the box by means of fastening elements (62), each lateral flank having a second linking portion (70) through which passes a second connection orifice (72) that is aligned with said first connection orifice (68), and is also designed to receive the connection pin (74) of the lateral front wing attachment (18b).

2. Mounting pylon according to Claim 1, **characterized in that** said second linking portion (70) is arranged adjacent to an opening (80) created through the rear sub-structure (8b) for the purpose of carrying out maintenance operations.

3. Mounting pylon according to Claim 2, **characterized in that** said opening (80) is created in part in the lateral flank (44) and in part in an upper or lower flank (46) of the rear sub-structure (8b), from which flank said second linking portion (70) extends outwards.

4. Mounting pylon according to any one of the preceding claims, **characterized in that** each of the first and second linking portions (66, 70) is in the form of a lug.

5. Mounting pylon according to any one of the preceding claims, **characterized in that** said rear sub-structure (8b) has a shape that narrows in the rearward direction, and is preferably in the general shape of a cone or a pyramid.

6. Mounting pylon according to any one of the preceding claims, **characterized in that** said rear sub-structure (8b) is made of composite material.

7. Mounting pylon according to any one of the preceding claims, **characterized in that** said rear sub-structure (8b) comprises a front fastening end (50b) that is secured by means of said fastening elements (62) to the two lateral panels of the box (40), and to an upper spar (36) and a lower spar (38) of this same box.

8. Mounting pylon according to the preceding claim, **characterized in that** either the upper spar or the lower spar of the box (36) comprises a rear spar extension (36a) covering part of the rear sub-structure (8b), and secured thereto by fastening elements (62).

9. Mounting pylon according to any one of the preceding claims, **characterized in that** the fastening elements (62) are bolts.

10. Mounting pylon according to any one of the preceding claims, **characterized in that** it comprises a reinforcement element (64) added between the two lateral flanks (44) of the rear sub-structure (8b).

11. Mounting pylon according to any one of the preceding claims, **characterized in that** the rear end (50b) of the rear sub-structure (8b) defines two rear connection orifices (52) that are aligned and designed to receive said connection pin (54) of the rear wing attachment (18c).

12. Assembly (5) for an aircraft, including:
- an engine mounting pylon (4) according to any one of the preceding claims;
- a wing element (2); and
- means (18) for mounting the primary structure (8) of the pylon on the wing element (2) of the aircraft.

13. Assembly according to Claim 12, **characterized in that** said mounting means (18) consist:
- of a central front wing attachment (18a);
- of two lateral front wing attachments (18b);
- of a rear wing attachment (18c) including a connection pin (56) passing through at least one rear connection orifice (54) of the rear end (50a) of the rear sub-structure (8b), or of a bolted attachment (18c') comprising bolts passing through an upper flank (46) of the sub-structure (8b).

14. Assembly according to Claim 12 or Claim 13, **characterized in that** said mounting means (18) form a statically determinate or statically indeterminate system for reacting forces.

15. Aircraft (200) comprising at least one assembly (5) according to the preceding claim.
